# EUROPEAN PATENT SPECIFICATION

(11) **EP 2 442 218 B1**
(45) Date of publication and mention of the grant of the patent: **30.08.2017**
(21) Application number: 10786369.8
(22) Date of filing: 09.06.2010
(51) Int. Cl.: G06F 3/048, G06F 3/14, G06F 9/44, G06F 3/0486, G06F 3/0488

(54) **METHOD FOR PROVIDING A GUI IN WHICH THE CONNECTION RELATIONSHIPS AND THE ARRANGEMENT OF DEVICES ARE SHOWN, AND DEVICE ADOPTING SAME**
VERFAHREN ZUR BEREITSTELLUNG EINER GRAPHISCHEN BENUTZEROBERFLÄCHE MIT ANZEIGE VON VERBINDUNGSVERHÄLTNISSEN UND GERÄTEANORDNUNGEN SOWIE VORRICHTUNG ZUR ANWENDUNG DIESES VERFAHRENS
PROCÉDÉ ET DISPOSITIF DE MISE EN OEUVRE D'UNE GUI FAISANT APPARAÎTRE LES RELATIONS DE CONNEXION ET L'ORGANISATION DES DISPOSITIFS

(30) Priority: 09.06.2009 KR 20090050852
(43) Date of publication of application: 18.04.2012
(73) Proprietor: Samsung Electronics Co., Ltd., Suwon-si, Gyeonggi-do, 443-742 (KR)
(72) Inventor: KWAHK, Ji-Young, Seongnam-si Gyeonggi-do 463-020 (KR); KWON, Giang-Yoon, Seoul 134-050 (KR); JEON, Jin-Young, Seoul 135-081 (KR); HWANG, Sang-Woong, Yongin-si Gyeonggi-do 446-572 (KR); YOON, Jee-Sun, Seoul 137-755 (KR)
(74) Representative: HGF Limited
(86) International application number: PCT/KR2010/003703
(87) International publication number: WO 2010/143886

(56) References cited:
- JP-A- 2008 234 122
- US-A1- 2004 155 899
- US-A1- 2005 015 444
- US-A1- 2005 048 987
- US-A1- 2005 149 876
- US-A1- 2006 026 274
- US-A1- 2006 267 857
- US-A1- 2008 086 691
- US-A1- 2008 180 699
- US-A1- 2009 030 953

## Description

### Technical Field

The present invention relates to a method of providing a graphic user interface (GUI) and a device to which the method is applied, and more particularly, a method of providing a GUI that allows a user to acquire information therefrom and to enter a command based on the acquired information and a device to which the method is applied.

### Background Art

Recent developments in network technology have opened the way for many devices to be connected to a network and to operate in connection with one another, and have brought a variety of convenient services.

In particular, user convenience has been improved by various techniques that allow devices to transmit/receive data to/from each other via a network and enable various commands to be entered indirectly to devices via other devices.

However, in a case in which there are too many devices connected to a network, it may be difficult to properly manage the devices and identify each of the devices.

US-2006/0267857-A1 discloses a system for operating multiple independent terminals of grouped, locally connected input and output devices through a single graphical user interface layer running a computer comprising an event queue module for receiving each input command from each input device; an event handler module for receiving the input commands from the event queue module and directing input commands from specific input devices via corresponding socket/listeners of the single graphical user interface layer to corresponding ones of multiple pointers, focuses and client applications based on predetermined associations between grouped devices and respective ones of the socket/listeners; and an output module for directing output commands from each socket/listener to respective ones of the output devices based on the predetermined associations.

US-2005/0015444-A1 discloses an audio-video conferencing system. The system comprises a server and one or more audio/video conferencing devices interconnected through a public or private data network. A graphical user interface provides for a means to graphically view and configure one or more conferences, participants and conference call configuration settings.

### Detailed description of the invention

### Technical Problem

The present invention aims at providing a graphic user interface (GUI) that displays the connections between devices and the pattern of the arrangement of the devices to help a user identify the devices easily and intuitively.

### Technical Solution

In accordance with a first aspect of the present invention, a method of providing a graphic user interface (GUI) is provided. The method comprises: determining connections between a plurality of devices and location of the plurality of devices relative to one another based on a signal received from the plurality of devices; generating a GUI that displays the plurality of devices, the connections between the plurality of devices and an arrangement of the plurality of devices, based on the determined location; and displaying the GUI; wherein the arrangement of the plurality of devices indicates the locations of the plurality of devices relative to each other; wherein the connections between the plurality of devices include connections between a predetermined device and one or more direct neighboring devices of the predetermined device and connections between each of the direct neighboring devices and one or more neighboring devices of a corresponding direct neighboring device.

Also disclosed is a method of providing a graphic user interface (GUI), the method including: determining connections between and an arrangement of devices; generating a GUI that displays the devices and the connections between and the arrangement of the devices; and displaying the GUI.

The arrangement of the devices may include the arrangement of the predetermined device, the direct neighboring devices of the predetermined device, and the neighboring devices of each of the direct neighboring devices of the predetermined device.

The generating may include: displaying the devices; connecting the devices with connection lines with reference to the arrangement of the devices; and rearranging the devices such that the connection lines becomes shorter.

The connection lines may connect between sides of each pair of devices that face each other.

Connection lines between a predetermined device and one or more devices that are directly connected to the predetermined device may be displayed differently from connection lines between the predetermined device and one or more devices that are indirectly connected to the predetermined device.

The rearranging may include: disposing a predetermined device that most of the connection lines is drawn from in the middle of the GUI; and rearranging other devices such that connection lines between the predetermined device and the other devices are minimized.

The method may also include: deleting one or more of the connection lines selected by a user; and manually disconnecting connections between devices that are connected by the deleted connection lines.

The deleting may include deleting one or more connection lines between a predetermined device and one or more devices that are directly connected to the predetermined device.

The method may also include: displaying a connection line between at least two devices selected by a user; and setting a connection between the at least two devices.

The method may also include, in response to content being dragged and dropping off at one of the devices, transmitting the content to the device at which the content is dropped off.

The transmitting may include, in response to the device at which the content is dropped off being indirectly connected, transmitting the content to the device at which the content is dropped off via another device.

The method may also include, in response to a 'reset' command being received, performing the determining, the generating, and the displaying again.

The determining may include allowing a predetermined device to receive information on one or more neighboring devices via different sides thereof and to determine orientations of the neighboring devices and determine an arrangement of the neighboring devices based on the received information.

In accordance with a second aspect of the present invention, there is provided a device comprising a display and a controller. The controller is arranged to: determine connections between the device and one or more neighboring devices and location of the device and the one or more neighboring devices relative to one another based on a signal received from the one or more neighboring devices; generate a graphic user interface (GUI) that displays the device, the neighboring devices, the connections between the device and the neighboring devices, and an arrangement of the device and the neighboring devices, based on the determined location; and display the GUI on the display; wherein the arrangement of the device and the neighboring devices indicates the location of the device relative to the neighboring devices; wherein the connections between the device and the one or more neighboring devices include connections between the device and the one or more direct neighboring devices of the device and connections between each of the direct neighboring devices and one or more neighboring devices of a corresponding direct neighboring device.

Also disclosed is a device including: a display; and a controller which determines connections between and an arrangement of the device and one or more neighboring devices, generates a GUI that displays the device, the neighboring devices and the connections between and the arrangement of the device and the neighboring devices, and displays the GUI on the display.

Additional features of the invention will be set forth in the description which follows, and in part will be apparent from the description, or may be learned by practice of the invention.

### Advantageous Effects

As described above, according to the present invention, it is possible to easily and intuitively identify the connections between and the arrangement of devices that are connected to a network by using a GUI that displays the connections between and the arrangement of the devices.

In addition, it is possible to easily connect and disconnect devices that configure a network and to intuitively transmit content between the devices.

### Description of Drawings

The accompanying drawings, which are included to provide a further understanding of the invention and are incorporated in and constitute a part of this specification, illustrate embodiments of the invention, and together with the description serve to explain the principles of the invention.
FIG. 1 is a schematic diagram illustrating an example of determining the orientations of table-top devices that are located in vicinity thereof;
FIG. 2 is a table showing a connection/arrangement list held by a table-top device;
FIGS. 3 to 5 are diagrams illustrating an example of automatically generating and providing a connection/arrangement map using a connection/ arrangement map window;
FIG. 6 is a diagram illustrating an automatic connection resetting function;
FIGS. 7 to 10 are diagrams illustrating an example of manually disconnecting table-top devices;
FIGS. 11 to 14 are diagrams illustrating an example of manually setting connections between table-top devices;
FIGS. 15 and 16 are diagrams illustrating an example of manually changing the arrangement of table-top devices on a connection/ arrangement map;
FIGS. 17 and 18 are diagrams illustrating an example of transmitting content using a connection/ arrangement map;
FIGS. 19 to 22 are diagrams illustrating an example of displaying or deleting connection lines;
FIGS. 23 and 24 are diagrams illustrating an example of adjusting the size of a connection/ arrangement map;
FIG. 25 is a diagram illustrating an example of calling a connected device list;
FIG. 26 is a diagram illustrating an example of printing content using a connected device list that is provided along with a connection/ arrangement map;
FIG. 27 is a diagram illustrating an example of storing a connection/ arrangement map;
FIG. 28 is a block diagram of a device to which the present invention can be applied; and
FIG. 29 is a flowchart illustrating an operation of the device illustrated in FIG. 28.

### Mode for Invention

The invention is described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The present invention provides a connection/arrangement map that displays the connections between and the orientations of multiple devices as a graphic user interface (GUI). More specifically, the present invention directs toward establishing information for generating a connection/ arrangement map, providing a connection/ arrangement map, editing a connection/ arrangement map, providing various application functions using a connection/ arrangement map, and providing additional functions using a connection/ arrangement map.

Automatically generating/providing a connection/arrangement map and providing an automatic connection resetting function will be presented as examples of providing a connection/arrangement map; manually connecting or disconnecting devices and manually changing the arrangement of devices will be presented as examples of editing a connection/ arrangement map; transmitting and printing content using a connection/ arrangement map will be presented as examples of providing various applications using a connection/ arrangement map; and displaying/deleting connection lines, enlarging/reducing a connection/arrangement map, providing a connected device list, and storing a connection/arrangement map will be presented as examples of providing additional functions using a connection/arrangement map.

### 1. Establishment of Information for Generating Connection/Arrangement Map

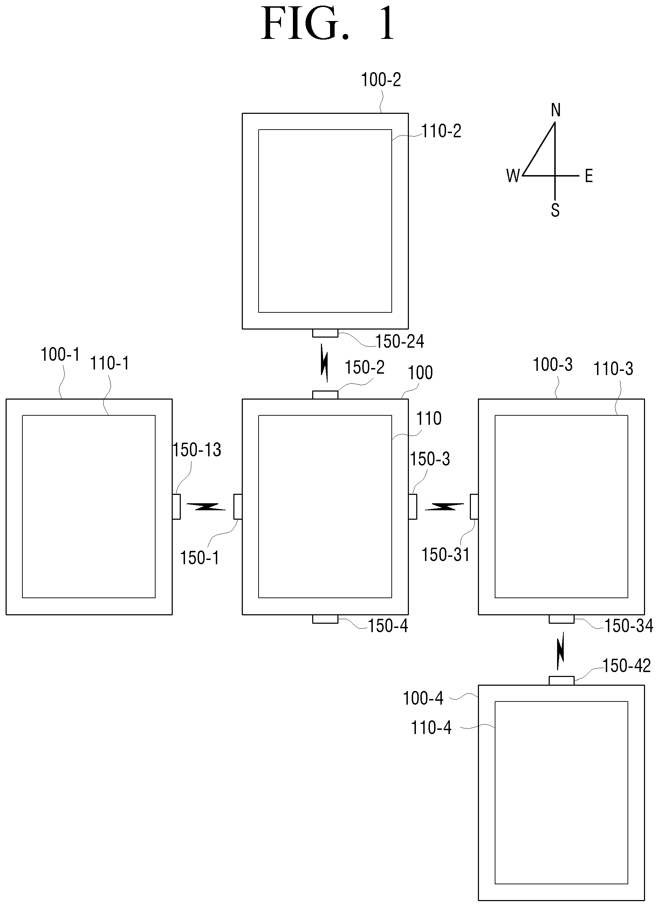

FIG. 1 is a diagram illustrating an example of determining the orientations of table-top devices that are located in vicinity thereof. FIG. 1 illustrates a plurality of table-top devices 100, 100-1, 100-2, 100-3, and 100-4.

The table-top devices 100, 100-1, 100-2, 100-3, and 100-4 may be connected so as to be able to communicate with one another via a network, wherein the network may be a wired or wireless network. Therefore, the table-top devices 100, 100-1, 100-2, 100-3, and 100-4 may transmit data to or receive data from one another.

The expression 'connected so as to be able to communicate via a network,' as used herein, does not necessarily imply that the table-top devices 100, 100-1, 100-2, 100-3, and 100-4 are "directly" connected to one another.

For example, the table-top device 100 may be "directly" connected to the first, second, and third table-top devices 100-1, 100-2, and 100-3, but may not be "directly" connected to the fourth table-top device 100-4.

In this example, if the third table-top device 100-3 is "directly" connected to the fourth table-top device 100-4, the table-top device 100 may be connected "indirectly" to the fourth table-top device 100-4 via the third table-top device 100-3.

Each of the table-top devices 100, 100-1, 100-2, 100-3 and 100-4 may include a touch screen provided at the top thereof and one or more infrared (IR) transceivers provided on the sides thereof. More specifically, the table-top device 100 includes a touch screen 110 and IR transceivers 150-1 to 150-4; the first table-top device 100-1 includes a touch screen 110-1 and an IR transceiver 150-13; the second table-top device 100-2 includes a touch screen 110-2 and an IR transceiver 150-24; the third table-top device 100-3 includes a touch screen 110-3 and IR transceivers 150-31 and 150-34; and the fourth table-top device 100-4 includes a touch screen 110-4 and an IR transceiver 150-42.

The IR transceivers 150-1 to 150-4, 150-13, 150-24, 150-31, 150-34 and 150-42 may be used for IR communications between the table-top devices 100, 100-1, 100-2, 100-3 and 100-4. More specifically, the IR transceivers of a pair of table-top devices that face each other may IR-communicate with each other.

For example, the IR transceiver 150-1, which is disposed on the west side of the table-top device 100, may IR-communicate with the IR transceiver 150-13, which is disposed on the east side of the first table-top device 100-1.

Through IR communications, the table-top devices 100, 100-1, 100-2, 100-3 and 100-4 may exchange their IDs with one another. More specifically, the IR transceiver 150-1 may transmit the ID of the table-top device 100, i.e., ID_#0, to the IR transceiver 150-13, and the IR transceiver 150-13 may transmit the ID of the first table-top device 100-1, i.e., ID_#1, to the IR transceiver 150-1.

The exchange of IDs through IR communications may also be performed between the IR transceiver 150-2 and the IR transceiver 150-24, between the IR transceiver 150-3 and the IR transceiver 150-31, and between the IR transceiver 150-34 and the IR transceiver 150-42.

The table-top device 100 may determine that the first table-top device 100-1 is located on its west side based on ID_#1, which is received from the IR transceiver 150-13 via the IR transceiver 150-1; may determine that the second table-top device 100-2 is located on its north side based on ID_#2, which is received from the IR transceiver 150-24 via the IR transceiver 150-1; and may determine that the third table-top device 100-3 is located on its east side based on ID_#3, which is received from the IR transceiver 150-31 via the IR transceiver 150-1.

Similarly, the first table-top device 100-1 may determine that the table-top device 100 is located on its east side based on ID_#0, which is received from the IR transceiver 150-1 via the IR transceiver 150-13, and the second table-top device 100-2 may determine that the table-top device 100 is located on its south side based on ID_#0, which is received from the IR transceiver 150-2 via the IR transceiver 150-24.

Similarly, the third table-top device 100-3 may determine that the table-top device 100 is located on its west side based on ID_#0, which is received from the IR transceiver 150-3 via the IR transceiver 150-31; and may determine that the fourth table-top device 100-4 is located on its south side based on ID_#4, which is received from the IR transceiver 150-42 via the IR transceiver 150-34.

Accordingly, the table-top devices 100, 100-1, 100-2, 100-3, and 100-4 may locate and identify their respective neighboring table-top devices.

The table-top devices 100, 100-1, 100-2, 100-3, and 100-4 may share their neighboring table-top device location information with one another. Accordingly, the table-top devices 100, 100-1, 100-2, 100-3, and 100-4 may identify not only their direct neighboring table-top devices but also their indirect neighboring table-top devices.

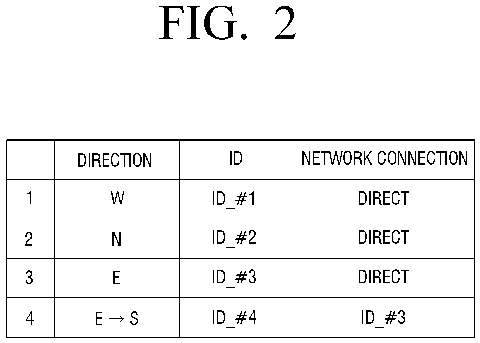

In this manner, the table-top devices 100, 100-1, 100-2, 100-3, and 100-4 may generate and maintain a connection/arrangement list regarding all the table-top devices that constitute a network. An example of a connection/arrangement list that may be held by the table-top device 100 is illustrated in FIG. 2.

Referring to FIG. 2, entry 1 shows that the first table-top device 100-1, which is directly connected to the table-top device 100 via a network and corresponds to ID_#1, is located on the west side of the table-top device 100; entry 2 shows that the second table-top device 100-2, which is directly connected to the table-top device 100 via a network and corresponds to ID_#2, is located on the north side of the table-top device 100; and entry 3 shows that the third table-top device 100-3, which is directly connected to the table-top device 100 via a network and corresponds to ID_#3, is located on the east side of the table-top device 100.

Entry 4 shows that the fourth table-top device 100-4, which is indirectly connected to the table-top device 100 via the third table-top device 100-3 and corresponds to ID_#4, is located on the south side of the table-top device 100.

The connection/arrangement list illustrated in FIG. 2 may be used to automatically generate a connection/arrangement map, which will be described in detail.

### 2. Provision of Connection/Arrangement MAP

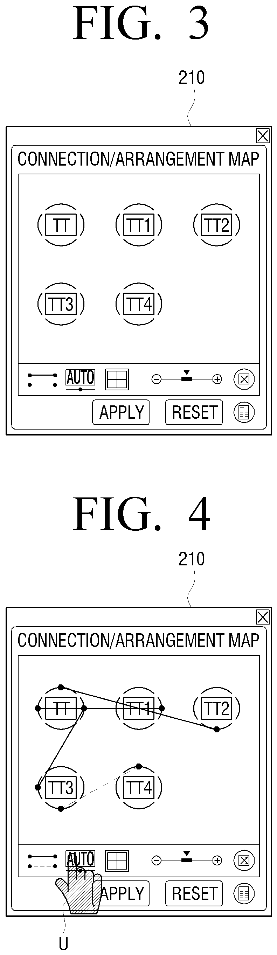

FIGS. 3 to 5 are diagrams illustrating examples of generating a connection/arrangement map using a connection/arrangement map window and providing the generated connection/arrangement map to a user.

Referring to FIG. 3, in response to the execution of a connection/arrangement map program installed in the table-top device 100, a connection/ arrangement map window 210 may be provided. A plurality of table-top devices TT, TT1, TT2, TT3, and TT4 may be displayed in the connection/arrangement map window 210 as icons.

Each of the icons may be encircled by four outlines that represent the four sides of a corresponding table-top device.

The table-top device TT may correspond to the table-top device in which the connection/arrangement map program is executed, and the table-top devices TT1, TT2, TT3, and TT4 may correspond to the table-top devices 100, 100-1, 100-2, 100-3, and 100-4, respectively, that are listed in the connection/arrangement list of FIG. 2.

Referring to FIG. 4, if a user U touches on an 'AUTO' icon, which is an automatic connection/arrangement icon, one or more connection lines that connect the table-top devices TT, TT1, TT2, TT3, and TT4 may appear.

Each of the connection lines may be drawn from one of the four outlines of a table-top device to one of the four outlines of another table-top device with reference to the connection/arrangement list of FIG. 2.

Referring to FIG. 2, the first table-top device TT1 is located on the west side of the table-top device TT, i.e., the table top device TT is located on the east side of the first table-top device TT-1. Accordingly, the east side of the table-top device TT and the west side of the first table-top device TT1 may face each other.

Therefore, a connection line may be drawn between the left outline of the table-top device TT and the right outline of the first table-top device TT1.

In this manner, a connection line may be drawn between the upper outline of the table-top device TT and the lower outline of the second table-top device TT2, and a connection line may be drawn between the right outline of the table-top device TT and the left outline of the third table-top device TT3.

Referring to entry 4 of the connection/arrangement list of FIG. 2, the fourth table-top device TT4, which corresponds to ID_#4, is located on the south side of the third table-top device TT3, which is located on the east side of the table-top device TT, i.e., the third table-top device TT3 is located on the north side of the third table-top device TT3. Accordingly, a connection line may be drawn between the lower outline of the third table-top device TT3 and the upper outline of the fourth table-top device TT4.

Referring to FIG. 4, the connection lines drawn between the table-top device TT and the first table-top device TT1, between the table-top device TT and the second table-top device TT2, and between the table-top device TT and the third table-top device TT3 may be solid lines. A solid line drawn between two table-top devices may indicate that the two table-top devices are directly connected.

Referring to FIG. 4, the connection line drawn between the third table-top device TT3 and the fourth table-top device TT4 may be a dotted line, which indicates that the third table-top device TT3 and the fourth table-top device TT4 are connected, but not directly, via the third table-top device TT3.

That is, a table-top device that is connected to the table-top device TT by a dotted line may be connected to the table-top device, but not directly.

Two table-top devices that are connected by a solid line may be manually connected to or disconnected from each other, whereas two table-top devices that are connected by a dotted line may not be able to be manually connected to or disconnected from each other.

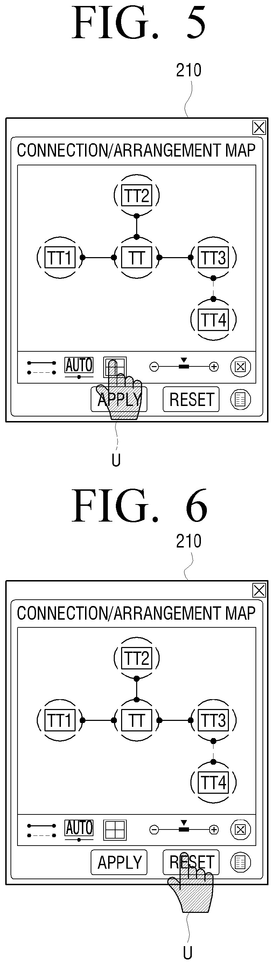

Referring to FIG. 5, in response to an automatic rearrangement icon ( 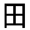 ) being pressed by the user U, the table-top devices TT, TT1, TT2, TT3, and TT4 may be automatically rearranged in the connection/ arrangement map window 210.

An automatic rearrangement of the table-top devices TT, TT1, TT2, TT3, and TT4 may be performed such that the lengths of the connection lines drawn between the table-top devices TT, TT1, TT2, TT3, and TT4 may be minimized.

As a result of the automatic rearrangement of table-top devices TT, TT1, TT2, TT3, and TT4, a table-top device to which most connection lines are connected (or a table-top device in which the connection/arrangement map window 210 is being executed), i.e., the table-top device TT, may be arranged in the middle; the first table-top device TT1 may be arranged on the west side of the table-top device TT to minimize the connection line drawn between the table-top device TT and the first table-top device TT1; the second table-top device TT2 may be arranged on the north side of the table-top device TT to minimize the connection line drawn between the table-top device TT and the second table-top device TT2; the third table-top device TT3 may be arranged on the east side of the table-top device TT to minimize the connection line drawn between the table-top device TT and the third table-top device TT3; and the fourth table-top device TT4 may be arranged on the south side of the table-top device TT to minimize the connection line drawn between the table-top device TT and the fourth table-top device TT4.

In this manner, a connection/arrangement map that displays the connections between and the arrangement of the table-top devices TT, TT1, TT2, TT3, and TT4 may be provided in the connection/ arrangement map window 210.

### 3. Automatic Connection Resetting

Referring to FIG. 6, in response to a 'REPEAT' icon, which is provided in the connection/arrangement map window 210 for performing an automatic connection resetting function, being pressed by the user U, the operations described above in sections '1. Establishment of Information for Generating Connection/Arrangement Map' and '2. Provision of Connection/Arrangement MAP' may be performed again. As a result of the automatic connection resetting function, any updates in the connections between and the arrangement of the table-top devices 100, 100-1, 100-2, 100-3, and 100-4 may be provided. Accordingly, the automatic connection resetting function may be performed when there is a need to update an existing connection/ arrangement map.

### 4. Manual Disconnection of Network Connection

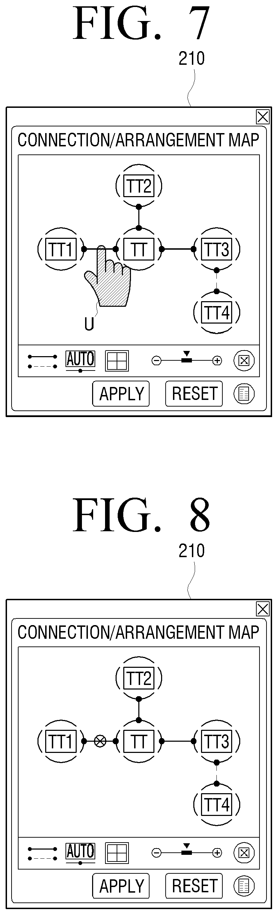

FIGS. 7 to 10 are diagrams illustrating manually disconnecting table-top devices.

Referring to FIGS. 7 and 8, in response to the connection line drawn between the table-top device TT and the first table-top device TT1 being touched by the user U, a 'disconnect' icon (ⓧ) may be displayed at a location touched by the user U.

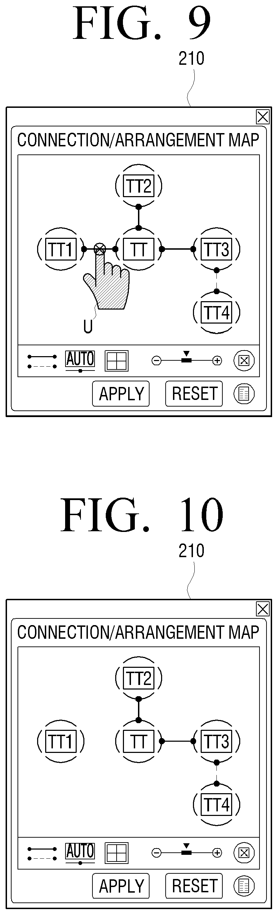

Referring to FIGS. 9 and 10, in response to the 'disconnect' icon (ⓧ) being touched by the user U, the connection line between the table-top device TT and the first table-top device TT1 may disappear, and the network connection between the table-top device TT and the first table-top device TT1 may be disconnected.

In a case in which the user U touches on the connection line between the third table-top device TT3 and the fourth table-top device TT4, no 'disconnect' icon (ⓧ) may be displayed on the corresponding connection line.

That is, since the connection/arrangement map 210 is being executed by the table-top device TT, but not by the third or fourth table-top device TT3 or TT4, connection settings regarding other table-top devices than the table-top device TT may be prevented from being arbitrarily modified. Accordingly, the network connection between the third table-top device TT3 and the fourth table-top device TT4 cannot be disconnected by using the connection/ arrangement map window 210.

### 5. Manual Establishment of Connection

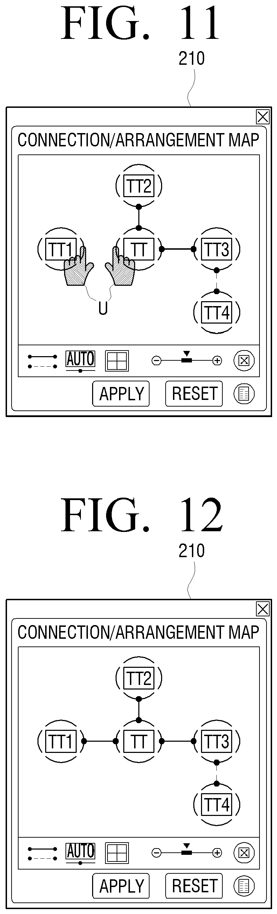

FIGS. 11 and 12 are diagrams illustrating manually establishing a connection between table-top devices.

Referring to FIGS. 11 and 12, in response to both the right outline of the first table-top device TT1 and the left outline of the table-top device TT being touched at the same time by the user U, a connection line may appear between the right outline of the first table-top device TT1 and the left outline of the table-top device TT, and a network connection may be established between the first table-top device TT1 and the table-top device TT.

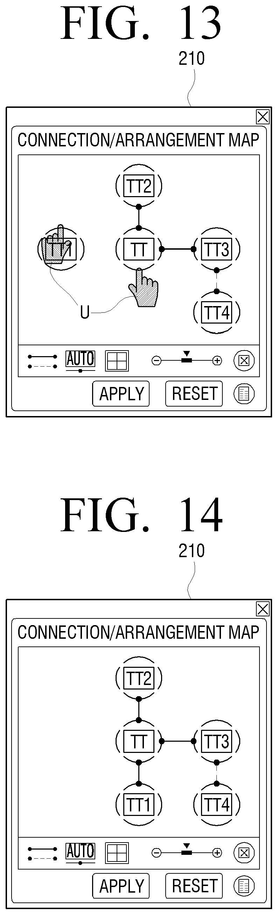

Referring to FIGS. 13 and 14, in response to both the upper outline of the first table-top device TT1 and the lower outline of the table-top device TT being touched at the same time by the user U, the table-top device TT1 may be moved below the table-top device TT, a solid line that connects the upper outline of the first table-top device TT1 and the lower outline of the table-top device TT may be displayed as a connection line, and a network connection may be established between the table-top device and the first table-top device TT1.

The example illustrated in FIGS. 13 and 14 may be performed in a case in which the first table-top device TT1 is actually moved to the south of the table-top device TT and its movement is recognized by the user U. In this manner, it is possible to avoid any complexity in a connection resetting process.

As described above, the connection between the third table-top device TT3 and the fourth table-top device TT4, which is represented by a dotted line, cannot be manually disconnected by the user U. In addition, no connection may be manually established between the third table-top device TT3 and the fourth table-top device TT4 by the user U.

### 6. Manual Rearrangement

The user U may manually rearrange the table-top devices TT, TT1, TT2, TT3, and TT4 in the connection/arrangement map window 210.

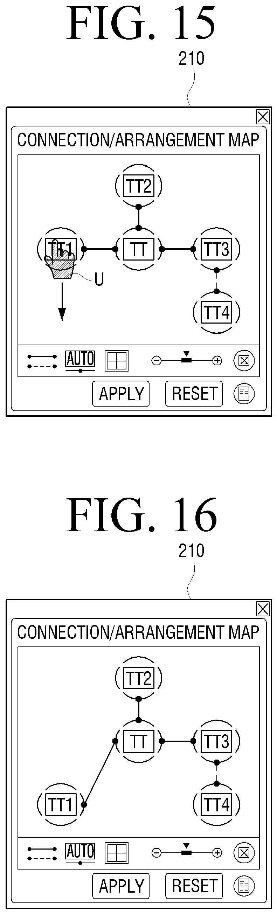

Referring to FIGS. 15 and 16, in response to the user U dragging the first table-top device TT1 and dropping it off at a predetermined position, the first table-top device TT1 may be moved to the predetermined position.

The example illustrated in FIGS. 15 and 16 may be performed for precisely reflecting the actual arrangement of the table-top devices TT, TT1, TT2, TT3, and TT4 or for other user convenience-related purposes.

For example, the example illustrated in FIGS. 15 and 16 may be performed to move a table-top device that is less relevant than other table-top devices to a side or corner of the connection/arrangement map window 210.

### 7. Transmission of Content Using Connection/Arrangement Map

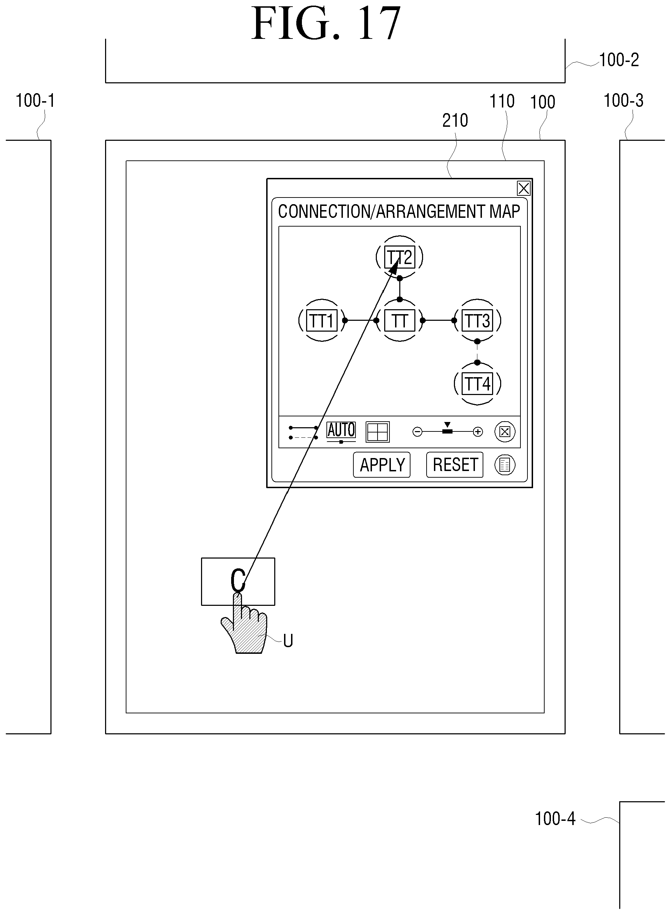

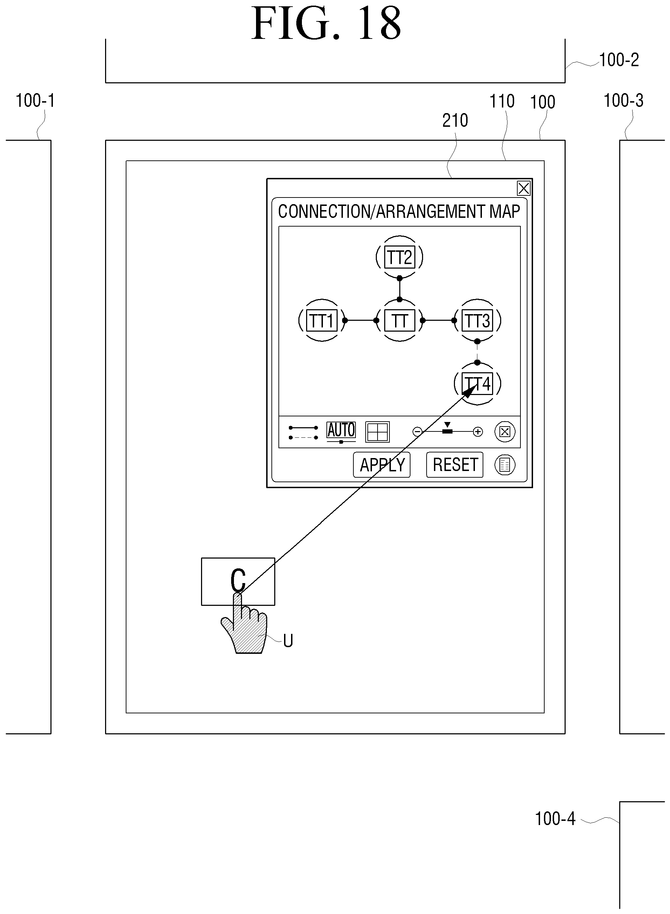

FIGS. 17 and 18 are diagrams illustrating transmitting content using a connection/ arrangement map.

Referring to FIG. 17, in response to the user U dragging content C on the touch screen 110 and dropping the content C off at the second table-top device TT2 in the connection/arrangement map window 210, the table-top device TT may transmit the content C to the second table-top device TT2.

Referring to FIG. 18, in response to the user U dragging content C on the touch screen 110 and dropping it off at the fourth table-top device TT4 in the connection/arrangement map window 210, the table-top device TT may transmit the content C to the fourth table-top device TT4 via the third table-top device TT3.

### 8. Display and Deletion of Connection Lines

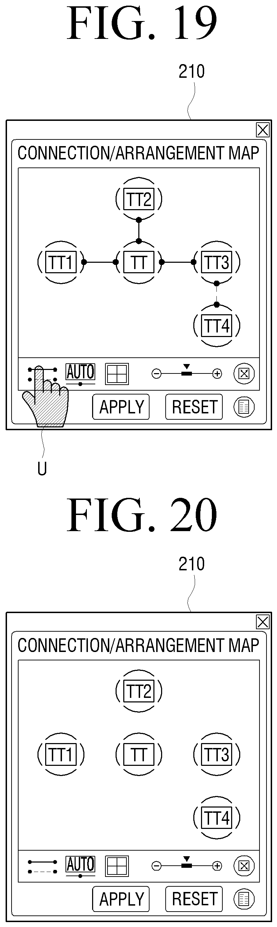

FIGS. 19 to 22 are diagrams illustrating displaying and deleting connection lines.

Referring to FIGS. 19 and 20, in response to the user U touching on an icon (=), which is provided in the connection/arrangement map window 210 for displaying/ deleting a connection line, connection lines in the connection/ arrangement map window 210 may all disappear.

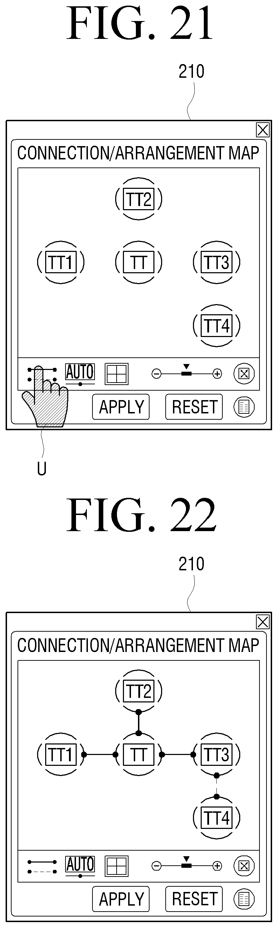

In this case, in response to the user U touching on the icon (=) again, the connection lines may appear back in the connection/ arrangement map window 210, as shown in FIG. 22.

### 9. Enlargement/Reduction of Connection/Arrangement Map

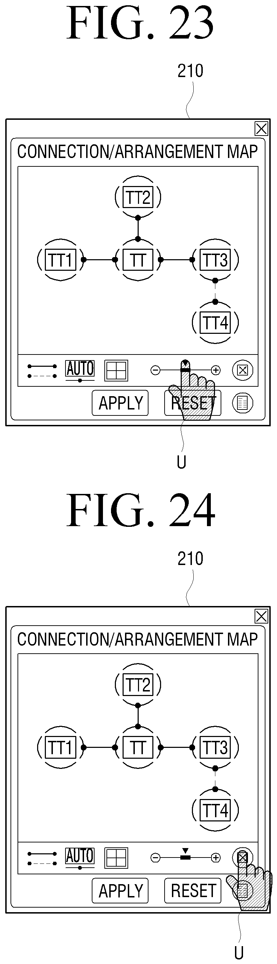

Referring to FIG. 23, the user U may enlarge or reduce the connection/ arrangement map window 210 to a desired size by dragging a zoom setting tool in the connection/arrangement map window 210.

Referring to FIG. 24, the user U may automatically adjust the size of the connection/arrangement map window 210 by touching on an automatic adjustment icon in the connection/arrangement map window 210.

### 10. Provision of Connected Device List

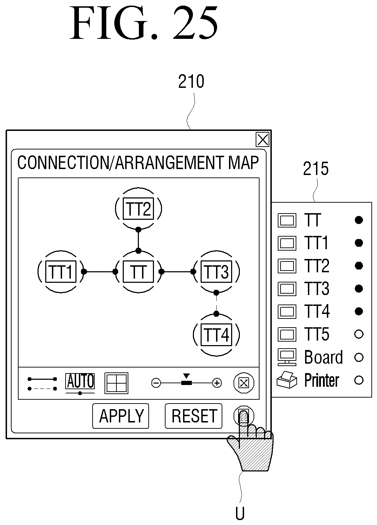

Referring to FIG. 25, the user U may withdraw a connected device list 215 by touching on a list icon ( 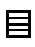 ) in the connection/ arrangement map window 210.

The connected device list 215 includes a plurality of devices that are connected to a network. Referring to the connected device list 215, the devices that are currently being displayed on a connection/arrangement map may be marked with "●," and the devices that are currently not being displayed on the connection/ arrangement map may be marked with "○." Accordingly, the devices that are currently being displayed on a connection/ arrangement map may be easily distinguished from the devices that are currently not being displayed on the connection/ arrangement map.

### 11. Printing of Content Using Connection/Arrangement Map

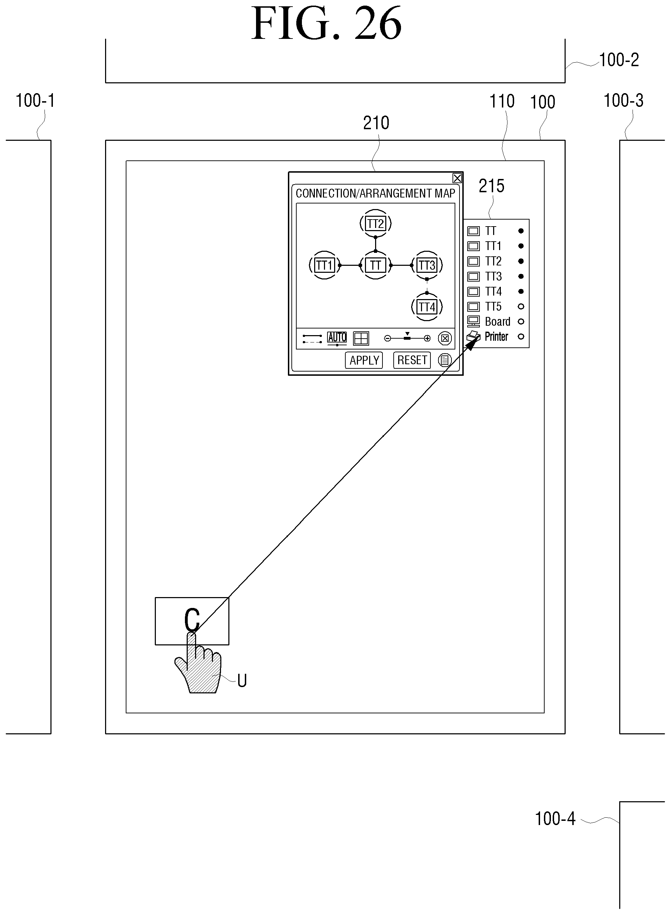

FIG. 26 is a diagram illustrating an example of printing content using the connected device list 215, which is provided along with a connection/ arrangement map.

Referring to FIG. 26, in response to the user U dragging content C on the touch screen 110 and dropping the content C off at a printer included in the connected device list 215 of the connection/ arrangement map window 210, the table-top device TT may transmit the content to the printer together with a 'print' command.

Accordingly, the printer may print the content C.

### 12. Storing of Connection/Arrangement Map

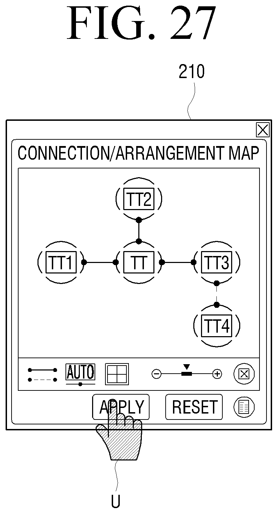

Referring to FIG. 27, the user U may store a connection/arrangement map currently being displayed in the connection/arrangement map window 210 as a file by touching on an 'APPLY' icon in the connection/arrangement map window 210. The stored connection/arrangement map may be transmitted to other devices.

### 13. Devices to which the Present Invention is Applicable

In the examples described above, a connection/arrangement map showing the connections between and the arrangement of table-top devices is provided. In another example, a connection/arrangement map may be provided for various types of devices, other than table-top devices, such as mobile devices, for example, a mobile phone, an MP3 player, a digital camera, a mobile PC, and the like, and non-mobile devices, for example, an electronic frame, an IP TV, a desktop PC, and the like.

The present invention may be applied not only to a group of homogeneous devices that configure a network but also a group of heterogeneous devices that configure a network. For example, the present invention may be applied to a network that is configured by table-top devices and stand-type displays such as a smart board, a printer, and the like.

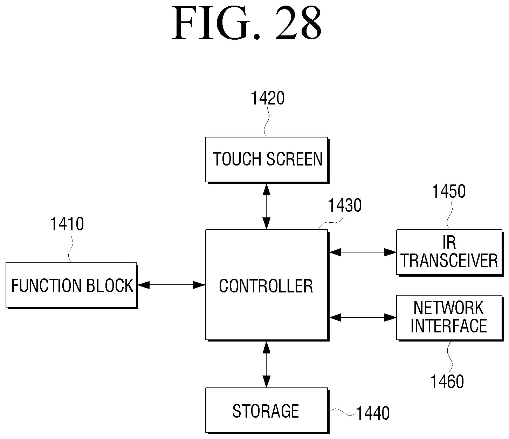

FIG. 28 is a block diagram of a device to which the present invention can be applied. Referring to FIG. 28, the device includes a function block 1410, a touch screen 1420, a controller 1430, a storage 1440, an IR transceiver 1450, and a network interface 1460.

The function block 1410 may perform the inherent functions of the device. For example, in a case in which the device is a table-top device, the function block 1410 may perform one or more digital conference-related functions. In another example, in a case in which the device is a mobile phone, the function block 1410 may perform the functions of a mobile phone.

The touch screen 1420 may perform the functions of a display such as, for example, displaying a connection/arrangement map window 210 and content C, and the functions of a user interface, such as, for example, receiving a user command (for example, a touch, a drag, a drag-and-drop, and the like) in accordance with the results of a function performed by the function block 1410.

The storage 1440 may be a storage medium in which a connection/arrangement map program, a connection/arrangement list, and content may be stored.

The IR transceiver 1450 may perform IR communication, and the network interface 1460 may perform network communication.

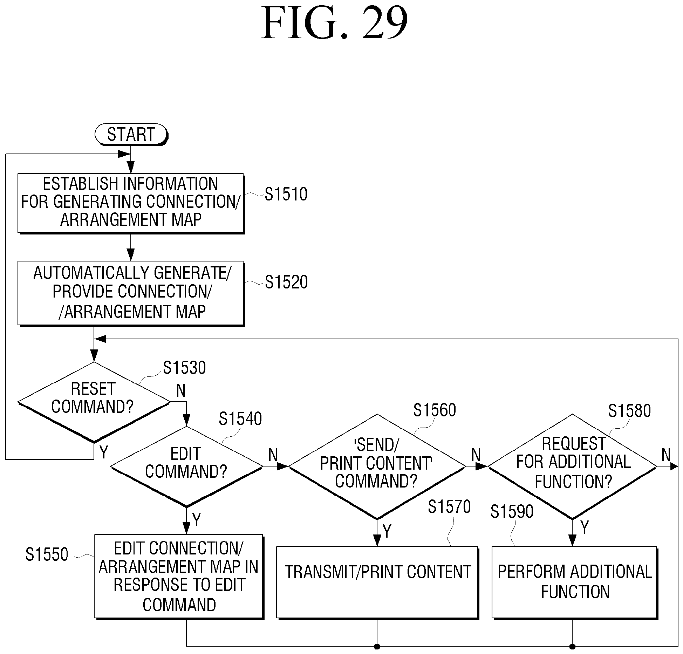

The controller 1430 may perform a method illustrated in FIG. 29, thereby providing a multifunctional connection/arrangement map to a user.

FIG. 29 is a flowchart illustrating a method of providing a multifunctional connection/ arrangement map to a user, according to an embodiment of the present invention.

Referring to FIG. 29, the controller 1430 may establish information for generating a connection/ arrangement map (S1510), may automatically generate a connection/arrangement map, and may provide the generated connection/arrangement map to a user (S1520).

In response to a 'reset' command being received from the user (S1530-Y), the method returns to operation S1510 so that the controller 1430 may perform S1510 and S1520 again.

In response to an 'edit connection/arrangement map' command being received from the user (S1540-Y), the controller 1430 may edit the generated connection/arrangement map in accordance with the 'edit connection/arrangement map' command (S1550). For example, the editing of the generated connection/ arrangement map may include manually disconnecting the connections between devices shown in the generated connection/arrangement map, manually establishing connections between the devices, and manually rearranging the devices.

In response to a 'transmit content' command or a 'print' command being received from the user via the generated connection/ arrangement map (S1560-Y), the controller 1430 may transmit or print content (S1570).

In response to a request for an additional function being issued by the user (S1580-Y), the controller 1430 may perform the requested additional function (S1590). For example, the requested additional function may include displaying/deleting connection lines, enlarging/ reducing the generated connection/ arrangement map, providing a connected device list, and storing the generated connection/ arrangement map.

### 14. Various Examples of Exchange of IDs between IR Transceivers

In the examples described above, the IR transceivers 150-1 to 150-4, 150-13, 150-24, 150-31, 150-34, and 150-42 are used to locate the table-top devices 100, 100-1, 100-2, 100-3, and 100-4.

Since IR communication is a type of directional communication, the IR transceivers 150-1 to 150-4, 150-13, 150-24, 150-31, 150-34, and 150-42 may be replaced by other communication devices with directivity.

For example, the IR transceivers 150-1 to 150-4, 150-13, 150-24, 150-31, 150-34, and 150-42 may be replaced by speaker-and-microphone devices with directivity, ultrasonic transceivers with directivity, or RF transceivers with directivity that can transmit/receive IDs to/from one another when facing one another.

In a case in which a table-top device is faced by another table-top device with a highest received signal strength level, it may locate its neighboring table-top device with a communication device with weak directivity or even without directivity.

The exchange of IDs between table-top devices may be performed through network communication. In this example, the IR transceivers of the table-top devices may sequentially issue an ID request to their respective neighboring table-top devices. In response to the receipt of a ID request, the IR transceivers of the table-top devices may transmit their IDs via a network.

For example, in a case in which the IR transceiver 150-1 of the table-top device 100 issues an ID request through IR communication, the IR transceiver 150-13 of the first table-top device 100-1 may transmit ID_#1 to a network. In response to the receipt of ID_#1 via the network, the table-top device 100 may identify that the table-top device on the opposite side thereof, i.e., the table-top device located on the west side thereof, is a table-top device with ID_#1, i.e., the first table-top device 100-1.

Various information, other than IDs, may be exchanged between table-top devices. For example, table-top devices may exchange their signal-to-noise ratio (S/N) information or network addresses with one another.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A method of providing a graphic user interface, GUI, the method comprising:
determining (S1510) connections between a plurality of devices (100 - 100-4) and location of the plurality of devices (100 - 100-4) relative to one another based on a signal received from the plurality of devices (100 - 100-4);
generating (S1520) a GUI that displays the plurality of devices (100 - 100-4), the connections between the plurality of devices (100 - 100-4) and an arrangement of the plurality of devices (100 - 100-4), based on the determined location; and
displaying (S1520) the GUI;
wherein the arrangement of the plurality of devices (100 - 100-4) indicates the locations of the plurality of devices (100 - 100-4) relative to each other; and
wherein the connections between the plurality of devices (100 - 100-4) include connections between a predetermined device (100) and one or more direct neighboring devices (100-1 - 100-3) of the predetermined device (100) and connections between each of the direct neighboring devices (100-1 - 100-3) and one or more neighboring devices (100-4) of a corresponding direct neighboring device (100-1 - 100-3).

2. The method of claim 1, wherein the arrangement of the plurality of devices (100 - 100-4) includes the arrangement of the predetermined device (100), the direct neighboring devices (100-1 - 100-3) of the predetermined device (100), and the neighboring devices (100-4) of each of the direct neighboring devices (100-1 - 100-3) of the predetermined device (100).

3. The method of claim 1, wherein the generating (S1520) comprises:
displaying the plurality of devices (100 - 100-4);
connecting the plurality of devices (100 - 100-4) with connection lines with reference to the arrangement of the plurality of devices (100 - 100-4); and
rearranging the plurality of devices (100 - 100-4) such that the connection lines becomes shorter.

4. The method of claim 3, wherein the connection lines connect between sides of each pair of plurality of devices (100 - 100-4) that face each other.

5. The method of claim 3, wherein connection lines between a predetermined device (100) and one or more devices (100-1 - 100-3) that are directly connected to the predetermined device (100) are displayed differently from connection lines between the predetermined device (100) and one or more devices (100-4) that are indirectly connected to the predetermined device (100).

6. The method of claim 3, wherein the rearranging comprises:
disposing a predetermined device (100) that most of the connection lines is drawn from in the middle of the GUI; and
rearranging other devices (100-1 - 100-4) such that connection lines between the predetermined device (100) and the other devices (100-1 - 100-4) are minimized.

7. The method of claim 1, further comprising:
deleting one or more of the connection lines selected by a user; and
manually disconnecting connections between devices (100 - 100-4) that are connected by the deleted connection lines.

8. The method of claim 7, wherein the deleting comprises deleting one or more connection lines between a predetermined device (100) and one or more devices (100-1 - 100-3) that are directly connected to the predetermined device (100).

9. The method of claim 1, further comprising:
displaying a connection line between at least two devices (100 - 100-4) selected by a user; and
setting a connection between the at least two devices (100 - 100-4).

10. The method of claim 1, further comprising:
in response to content being dragged and dropping off at one of the devices (100 - 100-4), transmitting (S1560) the content to the device (100 - 100-4) at which the content is dropped off.

11. The method of claim 10, wherein the transmitting (S1560) comprises, in response to the device (100-4) at which the content is dropped off being indirectly connected, transmitting (S1560) the content to the device (100-4) at which the content is dropped off via another device (100-3).

12. The method of claim 1, further comprising:
in response to a 'reset' command being received, performing the determining (S1510), the generating (S1520), and the displaying (S1520) again.

13. The method of claim 1, wherein the determining (S1510) comprises:
allowing a predetermined device (100) to receive information on one or more neighboring devices (100-1 - 100-4) via different sides thereof and to determine orientations of the neighboring devices (100-1 - 100-4) and determine an arrangement of the neighboring devices (100-1 - 100-3) based on the received information.

14. A device (100) comprising:
a display (1420); and
a controller (1430) arranged to:
determine (S1510) connections between the device (100) and one or more neighboring devices (100-1 - 100-4) and location of the device (100) and the one or more neighboring devices (100-1 - 100-4) relative to one another based on a signal received from the one or more neighboring devices;
generate (S1520) a graphic user interface, GUI, that displays the device (100), the neighboring devices (100-1 - 100-4), the connections between the device (100) and the neighboring devices (100-1 - 100-4), and an arrangement of the device (100) and the neighboring devices (100-1 - 100-4), based on the determined location; and
display (S1520) the GUI on the display (1420);
wherein the arrangement of the device (100) and the neighboring devices (100-1 - 100-4) indicates the location of the devices (100) relative to the neighboring devices (100-1 - 100-4); and
wherein the connections between the device (100) and the one or more neighboring devices (100-1 - 100-4) include connections between the device (100) and the one or more direct neighboring devices (100-1 - 100-3) of the device (100) and connections between each of the direct neighboring devices (100-1 - 100-3) and one or more neighboring devices (100-4) of a corresponding direct neighboring device (100-1 - 100-3).

15. The device of claim 14, wherein the device is arranged to implement each step of the method according to any one of claims 2 to 13.

## Patentansprüche

1. Ein Verfahren zur Bereitstellung einer grafischen Benutzeroberfläche (Graphic User Interface, GUI), wobei das Verfahren Folgendes umfasst:
Ermitteln (S1510) von Verbindungen zwischen einer Vielzahl von Vorrichtungen (100 - 100-4) sowie der Position der Vielzahl von Vorrichtungen (100 - 100-4) in Bezug zueinander, wobei dies basierend auf einem Signal erfolgt, das von der Vielzahl von Vorrichtungen (100 - 100-4) empfangen wurde;
Generieren (S1520) einer GUI, welche die Vielzahl von Vorrichtungen (100 - 100-4), die Verbindungen zwischen der Vielzahl von Vorrichtungen (100 - 100-4) und eine Anordnung der Vielzahl von Vorrichtungen (100 - 100-4) basierend auf der ermittelten Position anzeigt; und
Anzeigen (S1520) der GUI;
wobei die Anordnung der Vielzahl von Vorrichtungen (100 - 100-4) die Positionen der Vielzahl von Vorrichtungen (100 - 100-4) in Bezug zueinander angibt; und
wobei die Verbindungen zwischen der Vielzahl von Vorrichtungen (100 - 100-4) Verbindungen zwischen einer vorbestimmten Vorrichtung (100) und mindestens einer direkten Nachbarvorrichtung (100-1 - 100-3) der vorbestimmten Vorrichtung (100) sowie Verbindungen zwischen jeder der direkten Nachbarvorrichtungen (100-1 - 100-3) und mindestens einer Nachbarvorrichtung (100-4) einer entsprechenden direkten Nachbarvorrichtung (100-1 - 100-3) umfassen.

2. Das Verfahren nach Anspruch 1, wobei die Anordnung der Vielzahl von Vorrichtungen (100 - 100-4) die Anordnung der vorbestimmten Vorrichtung (100), der direkten Nachbarvorrichtungen (100-1 - 100-3) der vorbestimmten Vorrichtung (100) sowie die Nachbarvorrichtungen (100-4) jeder direkten Nachbarvorrichtung (100-1 - 100-3) der vorbestimmten Vorrichtung (100) umfasst.

3. Das Verfahren nach Anspruch 1, wobei das Generieren (S1520) Folgendes umfasst:
Anzeigen der Vielzahl von Vorrichtungen (100 - 100-4);
Verbinden der Vielzahl von Vorrichtungen (100 - 100-4) anhand von Verbindungslinien, die auf die Anordnung der Vielzahl von Vorrichtungen (100 - 100-4) verweisen; und
Neuanordnen der Vielzahl von Vorrichtungen (100 - 100-4), um die Verbindungslinien zu kürzen.

4. Das Verfahren nach Anspruch 3, wobei die Verbindungslinien die Seiten jedes Paares der Vielzahl von einander gegenüberliegenden Vorrichtungen (100 - 100-4) verbinden.

5. Das Verfahren nach Anspruch 3, wobei die Verbindungslinien zwischen einer vorbestimmten Vorrichtung (100) und mindestens einer Vorrichtung (100-1 - 100-3), die direkt mit der vorbestimmten Vorrichtung (100) verbunden ist, anders dargestellt werden als Verbindungslinien zwischen der vorbestimmten Vorrichtung (100) und mindestens einer Vorrichtung (100-4), die indirekt mit der vorbestimmten Vorrichtung (100) verbunden ist.

6. Das Verfahren nach Anspruch 3, wobei die Neuanordnung Folgendes umfasst:
Entfernen einer vorbestimmten Vorrichtung (100), von der ein Großteil der Verbindungslinien in der Mitte der GUI gezogen wird; und
Neuanordnen von anderen Vorrichtungen (100-1 - 100-4), sodass die Verbindungslinien zwischen der vorbestimmten Vorrichtung (100) und den anderen Vorrichtungen (100-1 - 100-4) verkleinert werden.

7. Das Verfahren nach Anspruch 1, wobei dieses weiter Folgendes umfasst:
Löschen von mindestens einer durch den Benutzer ausgewählten Verbindungslinie; und
manuelles Trennen der Verbindungen zwischen Vorrichtungen (100 - 100-4), die über die gelöschten Verbindungslinien verbunden sind.

8. Das Verfahren nach Anspruch 7, wobei das Löschen umfasst, dass mindestens eine Verbindungslinie zwischen einer vorbestimmten Vorrichtung (100) und mindestens einer Vorrichtung (100-1 - 100-3) gelöscht wird, die direkt mit der vorbestimmten Vorrichtung (100) verbunden ist.

9. Das Verfahren nach Anspruch 1, wobei dieses weiter Folgendes umfasst:
Anzeigen einer Verbindungslinie zwischen mindestens zwei durch einen Benutzer ausgewählten Vorrichtungen (100 - 100-4); und
Festlegen einer Verbindung zwischen den mindestens zwei Vorrichtungen (100 - 100-4).

10. Das Verfahren nach Anspruch 1, wobei dieses weiter Folgendes umfasst:
Übertragen (S1560) von Inhalt an die Vorrichtung (100 - 100-4), in die der Inhalt abgelegt wird, infolge des Verschiebens und Ablegens des Inhalts in eine der Vorrichtungen (100 - 100-4).

11. Das Verfahren nach Anspruch 10, wobei das Übertragen (S1560) infolge der indirekten Verbindung der Vorrichtung (100-4), in die der Inhalt abgelegt wird, umfasst, dass der Inhalt über eine andere Vorrichtung (100-3) an die Vorrichtung (100-4), in die der Inhalt abgelegt wird, übertragen (S1560) wird.

12. Das Verfahren nach Anspruch 1, wobei dieses weiter Folgendes umfasst:
erneutes Durchführen des Ermittlungs- (S1510), Generierungs- (S1520) und Anzeigevorgangs (S1520) infolge des Empfangs eines Befehls zum "Zurücksetzen".

13. Das Verfahren nach Anspruch 1, wobei das Ermitteln (S1510) Folgendes umfasst:
Zulassen, dass eine vorbestimmte Vorrichtung (100) Informationen über mindestens eine Nachbarvorrichtung (100-1 - 100-4) von unterschiedlichen Seiten dieser Nachbarvorrichtung empfängt, die Ausrichtungen der Nachbarvorrichtungen (100-1 - 100-4) ermittelt und basierend auf den erhaltenen Informationen eine Anordnung der Nachbarvorrichtungen (100-1 - 100-3) ermittelt.

14. Eine Vorrichtung (100), die Folgendes umfasst:
eine Anzeige (1420); und
eine Steuereinheit (1430), die für folgende Zwecke ausgelegt ist:
Ermitteln (S1510) von Verbindungen zwischen der Vorrichtung (100) und mindestens einer Nachbarvorrichtung (100-1 - 100-4) sowie der Position der Vorrichtung (100) und der mindestens einen Nachbarvorrichtung (100-1 - 100-4) in Bezug zueinander, wobei dies basierend auf einem Signal erfolgt, das von der mindestens einen Nachbarvorrichtung empfangen wurde;
Generieren (S1520) einer grafischen Benutzeroberfläche (GUI), welche die Vorrichtung (100), die Nachbarvorrichtungen (100-1 - 100-4), die Verbindungen zwischen der Vorrichtung (100) und den Nachbarvorrichtungen (100-1 - 100-4) und eine Anordnung der Vorrichtung (100) und der Nachbarvorrichtungen (100-1 - 100-4) basierend auf der ermittelten Position anzeigt; und
Anzeigen (S1520) der GUI auf der Anzeige (1420);
wobei die Anordnung der Vorrichtung (100) und der Nachbarvorrichtungen (100-1 - 100-4) die Position der Vorrichtungen (100) in Bezug zu den Nachbarvorrichtungen (100-1 - 100-4) angibt; und
wobei die Verbindungen zwischen der Vorrichtung (100) und der mindestens einen Nachbarvorrichtung (100-1 - 100-4) Verbindungen zwischen der Vorrichtung (100) und der mindestens einen direkten Nachbarvorrichtung (100-1 - 100-3) der Vorrichtung (100) sowie Verbindungen zwischen jeder direkten Nachbarvorrichtung (100-1 - 100-3) und mindestens einer Nachbarvorrichtung (100-4) einer entsprechenden direkten Nachbarvorrichtung (100-1 - 100-3) umfassen.

15. Die Vorrichtung nach Anspruch 14, wobei die Vorrichtung dafür ausgelegt ist, jeden Schritt des Verfahrens entsprechend einem der Ansprüche 2 bis 13 auszuführen.

## Revendications

1. Un procédé de fourniture d'une interface utilisateur graphique, GUI, le procédé comprenant :
la détermination (S 1510) de connexions entre une pluralité de dispositifs (100 - 100-4) et l'emplacement de la pluralité de dispositifs (100 - 100-4) les uns par rapport aux autres en fonction d'un signal reçu à partir de la pluralité de dispositifs (100 - 100-4),
la génération (S1520) d'une GUI qui affiche la pluralité de dispositifs (100 - 100-4), les connexions entre la pluralité de dispositifs (100 - 100-4) et un agencement de la pluralité de dispositifs (100 - 100-4), en fonction de l'emplacement déterminé, et
l'affichage (S1520) de la GUI,
où l'agencement de la pluralité de dispositifs (100 - 100-4) indique les emplacements de la pluralité de dispositifs (100 - 100-4) les uns par rapport aux autres, et
où les connexions entre la pluralité de dispositifs (100 - 100-4) comprennent des connexions entre un dispositif prédéterminé (100) et un ou plusieurs dispositifs directement voisins (100-1 - 100-3) du dispositif prédéterminé (100) et des connexions entre chacun des dispositifs directement voisins (100-1 - 100-3) et un ou plusieurs dispositifs voisins (100-4) d'un dispositif directement voisin correspondant (100-1 - 100-3).

2. Le procédé selon la Revendication 1, où l'agencement de la pluralité de dispositifs (100 - 100-4) comprend l'agencement du dispositif prédéterminé (100), des dispositifs directement voisins (100-1 - 100-3) du dispositif prédéterminé (100) et des dispositifs voisins (100-4) de chacun des dispositifs directement voisins (100-1 - 100-3) du dispositif prédéterminé (100).

3. Le procédé selon la Revendication 1, où la génération (S1520) comprend :
l'affichage de la pluralité de dispositifs (100 - 100-4),
la connexion de la pluralité de dispositifs (100 - 100-4) à des lignes de connexion en faisant référence à l'agencement de la pluralité de dispositifs (100 - 100-4), et
le réagencement de la pluralité de dispositifs (100 - 100-4) de sorte que les lignes de connexion soient raccourcies.

4. Le procédé selon la Revendication 3, où les lignes de connexion sont connectées entre des côtés de chaque paire de la pluralité de dispositifs (100 - 100-4) qui se font face.

5. Le procédé selon la Revendication 3, où les lignes de connexion entre un dispositif prédéterminé (100) et un ou plusieurs dispositifs (100-1 - 100-3) qui sont directement connectés au dispositif prédéterminé (100) sont affichées différemment des lignes de connexion entre le dispositif prédéterminé (100) et un ou plusieurs dispositifs (100-4) qui sont connectés indirectement au dispositif prédéterminé (100).

6. Le procédé selon la Revendication 3, où le réagencement comprend :
la disposition d'un dispositif prédéterminé (100) à partir duquel la plupart des lignes de connexion sont tirées au milieu de la GUI, et
le réagencement d'autres dispositifs (100-1 - 100-4) de sorte que les lignes de connexion entre le dispositif prédéterminé (100) et les autres dispositifs (100-1- 100-4) soient minimisées.

7. Le procédé selon la Revendication 1, comprenant en outre :
la suppression d'une ou de plusieurs des lignes de connexion sélectionnées par un utilisateur, et
la déconnexion manuelle de connexions entre des dispositifs (100 - 100-4) qui sont connectés par les lignes de connexion supprimées.

8. Le procédé selon la Revendication 7, où la suppression comprend la suppression d'une ou de plusieurs lignes de connexion entre un dispositif prédéterminé (100) et un ou plusieurs dispositifs (100-1 - 100-3) qui sont directement connectés au dispositif prédéterminé (100).

9. Le procédé selon la Revendication 1, comprenant en outre :
l'affichage d'une ligne de connexion entre au moins deux dispositifs (100 - 100-4) sélectionnés par un utilisateur, et
l'établissement d'une connexion entre les au moins deux dispositifs (100 - 100-4).

10. Le procédé selon la Revendication 1, comprenant en outre :
en réponse au glissement et au dépôt d'un contenu au niveau d'un des dispositifs (100 - 100-4), la transmission (S1560) du contenu au dispositif (100 - 100-4) au niveau duquel le contenu est déposé.

11. Le procédé selon la Revendication 10, où la transmission (S1560) comprend, en réponse à la connexion indirecte du dispositif (100-4) au niveau duquel le contenu est déposé, la transmission (S1560) du contenu au dispositif (100-4) au niveau duquel le contenu est déposé par l'intermédiaire d'un autre dispositif (100-3).

12. Le procédé selon la Revendication 1, comprenant en outre :
en réponse à la réception d'une commande de réinitialisation, la ré-exécution des opérations de détermination (S 1510), de génération (S 1520) et d'affichage (S1520).

13. Le procédé selon la Revendication 1, où la détermination (S1510) comprend :
l'autorisation accordée à un dispositif prédéterminé (100) de recevoir des informations relatives à un ou plusieurs dispositifs voisins (100-1 - 100-4) par l'intermédiaire de côtés différents de ceux-ci et de déterminer des orientations des dispositifs voisins (100-1 - 100-4) et de déterminer un agencement des dispositifs voisins (100-1 - 100-3) en fonction des informations reçues.

14. Un dispositif (100) comprenant :
un dispositif d'affichage (1420), et
un dispositif de commande (1430) agencé de façon à :
déterminer (S1510) des connexions entre le dispositif (100) et un ou plusieurs dispositifs voisins (100-1 - 100-4) et l'emplacement du dispositif (100) et des un ou plusieurs dispositifs voisins (100-1 - 100-4) les uns par rapport aux autres en fonction d'un signal reçu à partir des un ou plusieurs dispositifs voisins,
générer (S1520) une interface utilisateur graphique, GUI, qui affiche le dispositif (100), les dispositifs voisins (100-1 - 100-4), les connexions entre le dispositif (100) et les dispositifs voisins (100-1 - 100-4) et un agencement du dispositif (100) et des dispositifs voisins (100-1 - 100-4) en fonction de l'emplacement déterminé, et
afficher (S1520) la GUI sur l'écran d'affichage (1420),
où l'agencement du dispositif (100) et des dispositifs voisins (100-1 - 100-4) indique l'emplacement des dispositifs (100) par rapport aux dispositifs voisins (100-1 - 100-4), et
où les connexions entre le dispositif (100) et les un ou plusieurs dispositifs voisins (100-1 - 100-4) comprennent des connexions entre le dispositif (100) et les un ou plusieurs dispositifs directement voisins (100-1 - 100-3) du dispositif (100) et des connexions entre chacun des dispositifs directement voisins (100-1 - 100-3) et un ou plusieurs dispositifs voisins (100-4) d'un dispositif directement voisin correspondant (100-1 - 100-3).

15. Le dispositif selon la Revendication 14, où le dispositif est agencé de façon à mettre en oeuvre chaque opération du procédé selon l'une quelconque des Revendications 2 à 13.
